(19) Europäisches Patentamt
European Patent Office
Office européen des brevets

(11) **EP 3 546 172 A1**

(12) **EUROPEAN PATENT APPLICATION**
published in accordance with Art. 153(4) EPC

(43) Date of publication:
**02.10.2019 Bulletin 2019/40**

(51) Int Cl.:
**B29C 45/14** (2006.01)

(21) Application number: **17894793.3**

(22) Date of filing: **31.07.2017**

(86) International application number:
**PCT/JP2017/027688**

(87) International publication number:
**WO 2018/142648 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.01.2017 JP 2017015043**

(71) Applicant: **Mitsubishi Heavy Industries, Ltd.**
**Chiyoda-ku,**
**Tokyo 1008332 (JP)**

(72) Inventors:
• **IKEDA Kosuke**
  **Tokyo 108-8215 (JP)**
• **OKABE Ryoji**
  **Tokyo 108-8215 (JP)**
• **WATANABE Yasunori**
  **Tokyo 108-8215 (JP)**
• **OKUDA Akihisa**
  **Tokyo 108-8215 (JP)**
• **SAKON Kana**
  **Tokyo 108-8215 (JP)**

(74) Representative: **Henkel, Breuer & Partner**
**Patentanwälte**
**Maximiliansplatz 21**
**80333 München (DE)**

(54) **METHOD FOR DETERMINING THICKNESS OF RESIN LAYER OF INSERT FILM, METHOD FOR MANUFACTURING RESIN MOLDING PROVIDED WITH INSERT FILM, AND INSERT FILM**

(57) The temperature T (°C) of a surface of an electroconductive mesh layer 15 in contact with a second resin layer (16), the thickness $t_1$ of a first resin layer (14), and the thickness $t_2$ of the second resin layer (16) satisfy expression (1). (1): $T = f1(\lambda_1, \rho_1, Cp_1)\ln(t_1) + f2(\lambda_2, \rho_2, Cp_2)\ln(t_2) + C = [\lambda_1/(\rho_1 \cdot Cp_1)] \, \partial^2 T/\partial x^2 + [\lambda_2/(\rho_2 \cdot Cp_2)] \partial^2 T/\partial x^2 + C = [\lambda_1/(\rho_1 \cdot Cp_1)] \cdot [(T^P_{n+1} + T^P_{n-1} - 2T^P_n)/(2 \cdot \Delta x)^2] + [\lambda_2/(\rho_2 \cdot Cp_2)] \cdot [(T^P_{n+1} + T^P_{n-1} - 2T^P_n)/(2 \cdot \Delta x)^2] + C.$

FIG. 9

EP 3 546 172 A1

**Description**

Technical Field

The present invention relates to a method for determining a thickness of a resin layer of an insert film provided on a surface of a molded resin article, a method for manufacturing an insert film-equipped molded resin article, and an insert film.

Priority is claimed on Japanese Patent Application No. 2017-015043, filed on January 31, 2017, the content of which is incorporated herein by reference.

Background Art

In the related art, in the field of aircrafts, automobiles, and the like, from the viewpoint of protecting a molded resin article from lightning current, a conductive mesh layer having high conductivity is bonded to the surface (outer face) of the molded resin article.

As the material of the molded resin article, for example, a fiber reinforced plastic having high strength and light weight is used. A thermosetting resin is used as the resin forming the fiber reinforced plastic.

In a case where a thermosetting resin is used as the resin forming the fiber reinforced plastic, the conductive mesh layer is covered with a thermosetting sheet under a high temperature and high pressure atmosphere at the time of autoclave molding such that the conductive mesh layer is fixed to the surface of the molded resin article.

In recent years, there has been a demand to use, instead of the thermosetting resin as the resin forming the fiber reinforced plastic, a thermoplastic resin that has a faster molding speed than the thermosetting resin, is cheap, and enables defective molded articles to be reused.

In the case where the thermoplastic resin is used as the resin forming the fiber reinforced plastic, it is preferable to provide a conductive mesh layer having high conductivity on the surface of the molded resin article using a film insert molding method disclosed in PTL 1.

Citation List

Patent Literature

[PTL 1] Japanese Patent No. 4037437

Summary of Invention

Technical Problem

However, in a case where the conductive mesh layer is provided on the surface of the molded resin article using the thermoplastic resin as the resin of the fiber reinforced plastic described above and using the film insert molding method, it is preferable to use an insert film including the conductive mesh layer.

As the insert film in this case, for example, an insert film in which a first resin layer fused to the surface of a molded resin article, a conductive mesh layer, and a second resin layer are sequentially laminated and the conductive mesh layer and the first and second resin layers are temporarily fixed is used.

In a case where the insert film having such a configuration is fused to the surface of the molded resin article, the insert film is disposed so that the second resin layer comes into contact with, in a space formed in a pair of molds, the inner face of one mold, a molten fiber reinforced plastic which is to become the material of the molded resin article is introduced into the space via a resin introduction portion provided in the other mold, the conductive mesh layer and the first and second resin layers are fused together by the heat of the molten fiber reinforced plastic, and the fiber reinforced plastic is cured by the heat of the molds at which the thermoplastic resin can be cured.

Accordingly, an insert film-equipped molded resin article in which the insert film is fused to the surface of the molded resin article is manufactured.

The present inventors conducted examinations before reaching the present invention. As a result, it was confirmed that in a case where the above-described film insert molding method is used, when the thicknesses of the first and second resin layers are small, there is concern that the effect of cooling the second resin layer by one mold may be increased, thermal fusion may occur only in a portion of the first resin layer disposed on the injection side being in contact with the molten fiber reinforced plastic, and thermal fusion may not occur in portions of the first and second layers being in contact with the conductive mesh layer.

On the other hand, it was confirmed that in a case where the thicknesses of the first and second layers are large, there is concern that since the thermal conductivity of the thermoplastic resin is lower than that of metal, thermal fusion occurs only in a portion of the first resin layer disposed on the injection side being in contact with the molten fiber reinforced plastic, and thermal fusion may not occur in portions of the first and second layers being in contact with the conductive mesh layer.

Furthermore, in this case, there is concern that depending on the thickness of the second resin layer, the second resin layer may not be remelted, and there is a possibility that the second resin layer and the conductive mesh layer may not be thermally fused together.

That is, it was found that if the thicknesses of the first and second resin layers are not optimized, thermal fusion at the boundaries between the first and second resin layers and the conductive mesh layer cannot be sufficiently performed.

Therefore, an object of the present invention is to provide a method for determining a thickness of a resin layer of an insert film which enables bonding strength between first and second resin layers and a conductive mesh layer to be increased, a method for manufacturing an insert film-equipped molded resin article, and an insert film.

Solution to Problem

In order to solve the problems, according to an aspect of the present invention, there is provided a method for determining a thickness of a resin layer of an insert film, the insert film formed by sequentially laminating a first resin layer thermally fused to a surface of a molded resin article formed of a fiber reinforced plastic containing a thermoplastic resin and reinforcing fibers, a conductive mesh layer, and a second resin layer which is formed of the same resin material as the first resin layer and comes into contact with a mold during molding of the molded resin article, in which a temperature $T$ (°C) of a face of the conductive mesh layer being in contact with the second resin layer, a thickness $t_1$ ($\mu$m) of the first resin layer, and a thickness $t_2$ ($\mu$m) of the second resin layer satisfy Equation (1).

$$T = f1(\lambda_1, \rho_1, Cp_1)\ln(t_1) + f2(\lambda_2, \rho_2, Cp_2)\ln(t_2) + C$$

$$= \{\lambda_1/(\rho_1 \cdot Cp_1)\}\partial^2 T/\partial x^2 + \{\lambda_2/(\rho_2 \cdot Cp_2)\}\partial^2 T/\partial x^2 + C$$

$$= \{\lambda_1/(\rho_1 \cdot Cp_1)\} \cdot \{(T^P_{n+1} + T^P_{n-1} - 2T^P_n)/(2 \cdot \Delta x)^2\} +$$

$$\{\lambda_2/(\rho_2 \cdot Cp_2)\} \cdot \{(T^P_{n+1} + T^P_{n-1} - 2T^P_n)/(2 \cdot \Delta x)^2\} + C \cdots (1)$$

In Equation (1), $\ln(t_1)$ is a natural logarithm of the thickness $t_1$ of the first resin layer, $\ln(t_2)$ is a natural logarithm of the thickness $t_2$ of the second resin layer, a thermal conductivity of the first and second resin layers is $\lambda_1$ (W/m·K), a density of the first and second resin layers is $\rho_1$ (kg/m³), a specific heat of the first and second resin layers is $Cp_1$ (J/kg·K), a density of the conductive mesh layer is $\rho_2$ (kg/m³), a specific heat of the conductive mesh layer is $Cp_2$ (J/kg·K), and a thermal conductivity of the conductive mesh layer is $\lambda_2$ (W/m·K).

In Equation (1), $n$, $n+1$, and $n-1$ attached to $T$ are the positions from a face of the second resin layer which is in contact with the mold when a total thickness obtained by summing the thickness of the first resin layer, the thickness of the second resin layer, and the thickness of the conductive mesh is divided by $m$ ($\leq n+1$), and $P$ attached to $T$ indicates time (sec).

In Equation (1), a temperature at time $P$ and position $n+1$ is $T^P_{n+1}$, a temperature at time $P$ and position $n-1$ is $T^P_{n-1}$, and a temperature at time $P$ and position $n$ is $T^P_n$.

In addition, in Equation (1), $2 \cdot \Delta x$ indicates a distance (m) from $n-1$ to $n+1$, and $C$ indicates a constant obtained based on the thicknesses and the material of the first and second resin layers.

According to the present invention, by determining the thicknesses $t_1$ and $t_2$ of the first and second resin layers to satisfy Equation (1), in the case where the insert film and the molded resin article are integrally molded by using a film insert molding method, at least the temperature of the first resin layer and the temperature of the portion of the second resin layer being in contact with the conductive mesh layer can be higher than the melting temperature of the first and second resin layers.

Accordingly, the portions of the first and second resin layers being in contact with the conductive mesh layer can be cured after being sufficiently melted, so that the bonding strength between the conductive mesh layer and the first and second resin layers can be increased.

In addition, in the method for determining a thickness of a resin layer of an insert film according to the aspect of the present invention, the thickness of the second resin layer may be larger than the thickness of the first resin layer.

As described above, in the case where the insert film and the molded resin article are integrally molded using the film insert molding method, by causing the thickness of the second resin layer being in contact with the mold to be larger than the thickness of the first resin layer, it is possible to suppress a decrease in the temperature of the portion of the second resin layer being in contact with the conductive mesh layer below the melting temperature of the second resin layer due to the heat of the mold at a temperature lower than the temperature of the molten fiber reinforced plastic introduced into the mold.

Furthermore, by causing the thickness of the first resin layer being in contact with the molten fiber reinforced plastic to be smaller than the thickness of the second resin layer, the heat of the molten fiber reinforced plastic is easily transferred to the portion of the second resin layer being in contact with the conductive mesh layer through the conductive mesh layer. Accordingly, a decrease in the temperature of the portion of the second resin layer being in contact with the conductive mesh layer below the melting temperature of the second resin layer can be suppressed.

Therefore, the bonding strength between conductive mesh layer and the second resin layer can be further increased.

According to another aspect of the present invention, there is provided a method for manufacturing an insert film-equipped molded resin article, including: a first step of preparing the insert film including the first and second resin layers having the thicknesses determined based on the method for determining a thickness of a resin layer of an insert film; a second step of disposing the insert film in a space formed between a first mold and second mold provided with a resin introduction inlet by bringing the second resin layer and an inner face of the first mold into contact with each other; a third step of introducing the fiber reinforced plastic which is molten into the space through the resin introduction inlet to melt at least portions of the first and second resin layers which are in contact with the conductive mesh layer, by heat of the molten fiber reinforced plastic, and curing the molten fiber reinforced plastic by the first and second molds at a temperature at which the thermoplastic resin is cured to mold a primary molded resin article including the molded resin article and fuse the insert film to the surface of the molded resin article; and a fourth step of forming the molded resin article to which the insert film is fused by removing unnecessary portions from the primary molded resin article.

With this method, by manufacturing the insert film-equipped molded resin article, the temperature of the entire first resin layer and the temperature of the portion of the second resin layer being in contact with the conductive mesh layer can be higher than the melting temperature of the first and second resin layers.

Accordingly, the portions of the first and second resin layers being in contact with the conductive mesh layer can be sufficiently melted, so that the bonding strength between the conductive mesh layer and the first and second resin layers can be increased.

In addition, in the method for manufacturing an insert film-equipped molded resin article according to the aspect of the present invention, in the third step, a temperature of the conductive mesh layer at an initial stage of introduction of the molten fiber reinforced plastic into the resin introduction inlet may be higher than a melting temperature of the first and second resin layers.

As described above, by causing the temperature of the conductive mesh layer at an initial stage of introduction of the molten fiber reinforced plastic into the resin introduction inlet to be higher than the melting temperature of the first and second resin layers, it is possible to reliably melt the portions of the first and second resin layers being in contact with the conductive mesh layer. Accordingly, the bonding strength between the conductive mesh layer and the first and second resin layers can be further increased.

In addition, in the method for manufacturing an insert film-equipped molded resin article according to the aspect of the present invention, Cu or Al may be used as a material of the conductive mesh layer.

As described above, by using Cu (thermal conductivity $398\ W \cdot m^{-1} \cdot K^{-1}$) or Al (thermal conductivity $236\ W \cdot m^{-1} \cdot K^{-1}$) having high thermal conductivity as the material of the conductive mesh layer, a decrease in the temperature caused by the conductive mesh layer can be suppressed.

Accordingly, a decrease in the temperature of the portion of the second resin layer being in contact with the conductive mesh layer below the melting temperature of the second resin layer can be suppressed, so that the bonding strength between conductive mesh layer and the second resin layer can be increased.

In addition, by using Cu or Al which is a material having high conductivity as the material of the conductive mesh layer, when lightning current flows to the insert film-equipped molded resin article, the lightning current can be easily led to the conductive mesh layer.

According to another aspect of the present invention, there is provided an insert film formed by sequentially laminating a first resin layer disposed on a surface of a molded resin article formed of a fiber reinforced plastic containing a thermoplastic resin, a conductive mesh layer, and a second resin layer formed of the same resin material as the first resin layer, in which a thickness of the second resin layer may be larger than a thickness of the first resin layer.

With this configuration, for example, in a case where the insert film and the molded resin article are integrally molded, it is possible to suppress a decrease in the temperature of the portion of the second resin layer being in contact with the mold, the portion being in conductive mesh layer, below the melting temperature of the second resin layer due to the heat of the mold at a temperature lower than the temperature of the molten fiber reinforced plastic introduced into the mold.

Furthermore, by causing the thickness of the first resin layer being in contact with the molten fiber reinforced plastic to be smaller than the thickness of the second resin layer, the heat of the molten fiber reinforced plastic is easily transferred to the portion of the second resin layer being in contact with the conductive mesh layer through the conductive mesh layer. Accordingly, a decrease in the temperature of the entire first resin layer and the temperature of the portion of the second resin layer being in contact with the conductive mesh layer below the melting temperature of the first and second resin layers can be suppressed.

Therefore, the bonding strength between conductive mesh layer and the first and second resin layers can be further increased.

In the insert film according to the aspect of the present invention, a material of the conductive mesh layer may use Cu or Al.

As described above, by using Cu or Al having high thermal conductivity as the material of the conductive mesh layer, a decrease in the temperature caused by the conductive mesh layer can be suppressed.

Accordingly, a decrease in the temperature of the boundary between the conductive mesh layer and the second resin layer below the melting temperature of the second resin layer can be suppressed, so that the bonding strength between conductive mesh layer and the second resin layer can be increased.

In addition, by using Cu or Al which is a material having high conductivity as the material of the conductive mesh layer, when lightning current flows to the insert film-equipped molded resin article, the lightning current can be easily led to the conductive mesh layer.

Advantageous Effects of Invention

According to the present invention, it is possible to increase the bonding strength between the first and second resin layers and the conductive mesh layer constituting the insert film.

Brief Description of Drawings

Fig. 1 is a sectional view of an insert film-equipped molded resin article according to an embodiment of the present invention.

Fig. 2 is an enlarged sectional view of a portion surrounded by region A in the insert film-equipped molded resin article illustrated in Fig. 1.

Fig. 3 is a view for describing a method for determining a thickness of a resin layer of an insert film according to the embodiment of the present invention (part 1) .

Fig. 4 is a view for describing the method for determining a thickness of a resin layer of an insert film according to the embodiment of the present invention (part 2) .

Fig. 5 is a graph showing the relationship between the thickness $t_1$ ($\mu$m) of a first resin layer and the thickness $t_2$ ($\mu$m) of a second resin layer in a case where polyamide 9T resin (PA9T resin) is used as the material of the first and second resin layers and Cu is used as the material of a conductive mesh layer.

Fig. 6 is a graph showing the relationship between the thickness $t_1$ of the first resin layer shown in Fig. 5 and the sum (= $t_1 + t_2$) of the thicknesses of the first and second resin layers shown in Fig. 5.

Fig. 7 is a sectional view for describing a manufacturing process of the insert film-equipped molded resin article according to the embodiment of the present invention (part 1).

Fig. 8 is a sectional view for describing the manufacturing process of the insert film-equipped molded resin article according to the embodiment of the present invention (part 2).

Fig. 9 is a sectional view for describing the manufacturing process of the insert film-equipped molded resin article according to the embodiment of the present invention (part 3).

Fig. 10 is a sectional view for describing the manufacturing process of the insert film-equipped molded resin article according to the embodiment of the present invention (part 4).

Description of Embodiments

Hereinafter, an embodiment to which the present invention is applied will be described in detail with reference to the drawings. The drawings used in the following description are for describing the configuration of the embodiment of the present invention, and there may be cases where the sizes, thicknesses, dimensions, and the like of the respective parts illustrated are different from the dimensional relationship of an actual insert film and an actual insert film-equipped molded resin article.

[Embodiment]

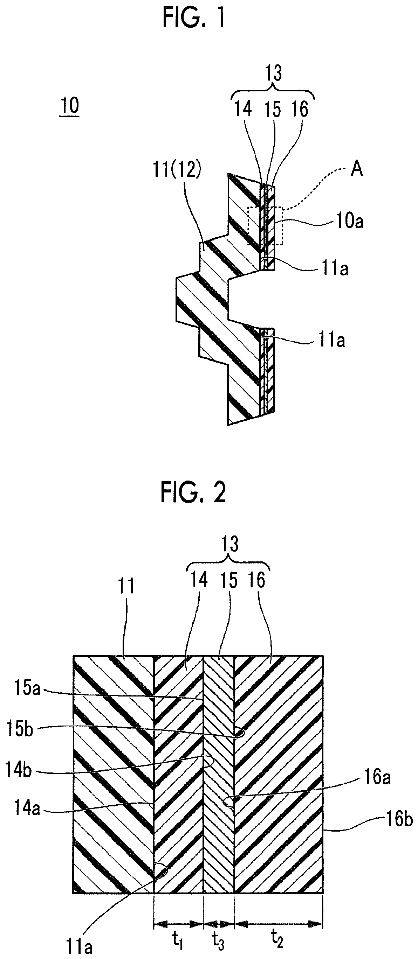

Fig. 1 is a sectional view of an insert film-equipped molded resin article according to an embodiment of the present invention. Fig. 2 is an enlarged sectional view of a portion surrounded by the region A in the insert film-equipped molded resin article illustrated in Fig. 1. In Fig. 2, $t_1$ indicates the thickness of a first resin layer 14 (hereinafter, referred to as "thickness $t_1$"), $t_2$ indicates the thickness of a second resin layer 16 (hereinafter, referred to as "thickness $t_2$"), and $t_3$ indicates the thickness of a conductive mesh layer 15 (hereinafter, referred to as "thickness $t_3$"). In Fig. 2, like constituent parts similar to those of the structure illustrated in Fig. 1 are denoted by like reference numerals.

In Figs. 1 and 2, since it is difficult to illustrate the section of the conductive mesh layer 15 in a mesh shape, the conductive mesh layer 15 is illustrated as a sheet-like section.

Referring to Figs. 1 and 2, an insert film-equipped molded resin article of the present embodiment includes a molded resin article 11 and an insert film 13. The insert film-equipped molded resin article 10 is, for example, a component used in the fields of aircrafts, automobiles, and the like.

The molded resin article 11 is formed of a fiber reinforced plastic 12 containing a thermoplastic resin and reinforcing fibers. The molded resin article 11 has a surface 11a (outer face) to which the insert film 13 is fused.

In the fiber reinforced plastic 12, for example, carbon fiber, glass fiber, aramid fiber, or the like can be used as the reinforcing fiber.

As the thermoplastic resin contained in the fiber reinforced plastic 12, for example, a resin such as PPS resin, nylon resin, or PEEK resin can be used.

The insert film 13 is formed by sequentially laminating the first resin layer 14, the conductive mesh layer 15, and the second resin layer 16.

In the insert film 13 before being fused to the surface 11a of the molded resin article 11, the first and second resin layers 14 and 16 and the conductive mesh layer 15 are temporarily fixed together. Therefore, in the insert film 13 before being fused to the surface 11a of the molded resin article 11, the bonding strength between the first and second resin layers 14 and 16 and the conductive mesh layer 15 is weak.

As a method for temporarily fixing the first and second resin layers 14 and 16 and the conductive mesh layer 15, for example, it is possible to use a method such as temporary fixing using a heat press or spot fusion.

The first resin layer 14 is a film-shaped resin layer and is thermally fused to the surface 11a of the molded resin article 11. The first resin layer 14 has first and second faces 14a and 14b.

The first face 14a is in contact with the surface 11a of the molded resin article 11. The first face 14a comes into contact with the molten fiber reinforced plastic 12 introduced into the mold in a case where the insert film 13 and the molded resin article 11 are integrated using a film insert molding method.

The second face 14b is disposed on the side opposite to the first face 14a. The second face 14b is in contact with the conductive mesh layer 15. The first resin layer 14 is fused to the conductive mesh layer 15.

As the material of the first resin layer 14, for example, a nylon resin (for example, polyamide 9T resin (PA9T resin)), polyetheretherketone (PEEK) resin, polyetherimide (PEI) resin, and polyether ketone ketone (PEKK) resin can be used. As the material of the first resin layer 14, for example, PA9T resin having high heat resistance is preferable.

The conductive mesh layer 15 is disposed between the first resin layer 14 and the second insulating layer 16. The conductive mesh layer 15 has first and second faces 15a and 15b.

The first face 15a is in contact with the second face 14b of the first resin layer 14. The second face 15b is disposed on the side opposite to the first face 15a.

The conductive mesh layer 15 is a place where the lightning current finally flows when the lightning current flows to the insert film-equipped molded resin article 10. That is, the conductive mesh layer 15 functions as a place to spark the lightning current.

Therefore, as the material of the conductive mesh layer 15, it is preferable to use a metal material having high conductivity. As such a metal material, for example, Cu or Al may be used.

As described above, by using Cu or Al having high conductivity as the material of the conductive mesh layer 15, when lightning current flows in the insert film-equipped molded resin article 10, the lightning current can be easily led to the conductive mesh layer 15.

Further, the thermal conductivity of Cu is 398 $W \cdot m^{-1} \cdot K^{-1}$, the thermal conductivity of Al is 236 $W \cdot m^{-1} \cdot K^{-1}$, and Cu and Al are materials having high thermal conductivity. By using Cu or Al having high thermal conductivity as the material of the conductive mesh layer 15, a decrease in the temperature of the molten fiber reinforced plastic 12 can be suppressed by the conductive mesh layer 15.

Accordingly, a decrease in the temperature of a portion of the second resin layer 16 being in contact with the conductive mesh layer 15 below the melting temperature of the second resin layer 16 is suppressed, so that the bonding strength between conductive mesh layer 15 and the second resin layer 16 can be increased.

For example, the thickness of the conductive mesh layer 15 can be appropriately set to be in a range of 100 $\mu$m or more and 250 $\mu$m or lower.

The second resin layer 16 is a film-shaped resin layer, and forms a surface 10a of the insert film-equipped molded resin article 10. The second resin layer 16 has first and second faces 16a and 16b.

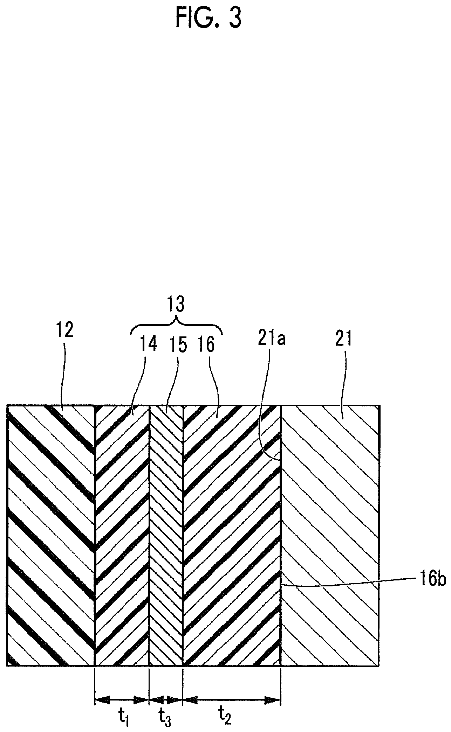

The first face 16a is in contact with the second face 15b of the conductive mesh layer 15. The second face 16b is disposed on the side opposite to the first face 16a. The second face 16 b comes into contact with a mold (a first mold 21 illustrated in Figs. 3 and 6 to 8 described later) in a case where the insert film 13 and the molded resin article 11 are integrated using the film insert molding method.

As described above, the fiber reinforced plastic 12 which is the material of the molded resin article 11 contains the thermoplastic resin. Therefore, from the viewpoint of curing the thermoplastic resin, the temperature of the mold is set to a temperature lower than the melting temperature of the first and second resin layers 14 and 16.

The thickness $t_2$ of the second resin layer 16 may be larger than the thickness $t_1$ of the first resin layer 14.

As described above, by causing the thickness $t_2$ of the second resin layer 16 being in contact with the mold to be larger than the thickness $t_1$ of the first resin layer, in a case where the insert film 13 and the molded resin article 11 are integrated using the film insert molding method, it is possible to suppress a decrease in the temperature of a portion of the second resin layer 16 being in contact with the conductive mesh layer 15 below the melting temperature of the second resin layer 16 by the heat of the mold set to a temperature lower than the temperature of the molten fiber reinforced plastic 12 introduced into the mold.

Accordingly, the portion of the second resin layer 16 being in contact with the conductive mesh layer 15 can be sufficiently melted, so that the bonding strength between the conductive mesh layer 15 and the second resin layer 15 can be increased.

Furthermore, by causing the thickness $t_1$ of the first resin layer 14 being in contact with the molten fiber reinforced plastic 12 to be smaller than the thickness $t_2$ of the second resin layer 16, the heat of the molten fiber reinforced plastic 12 is easily transferred to the first resin layer 14.

Accordingly, a portion of the first resin layer 14 being in contact with the conductive mesh layer 15 can be sufficiently melted, so that the bonding strength between the first resin layer 14 and the conductive mesh layer 15 can be increased.

Furthermore, by causing the thickness $t_1$ of the first resin layer 14 being in contact with the molten fiber reinforced plastic 12 to be smaller than the thickness $t_2$ of the second resin layer 16, the heat of the molten fiber reinforced plastic 12 is easily transferred to the portion of the second resin layer 16 being in contact with the conductive mesh layer 15.

Accordingly, the portion of the second resin layer 16 being in contact with the conductive mesh layer 15 can be sufficiently melted, so that the bonding strength between the conductive mesh layer 15 and the second resin layer 15 can be increased.

That is, according to the insert film 13 of the present embodiment, by causing the thickness $t_2$ of the second resin layer 16 to be larger than the thickness $t_1$ of the first resin layer 14, the bonding strength between the first and second resin layers 14 and 16 and the conductive mesh layer 15 can be increased.

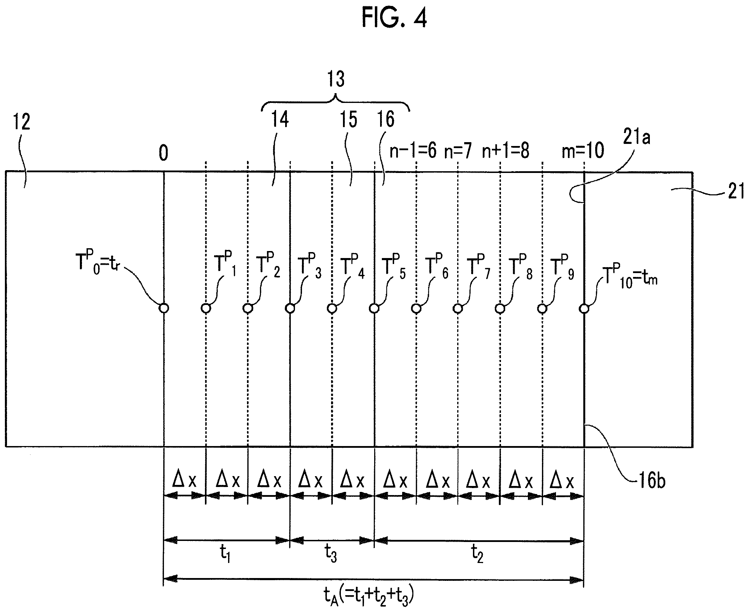

Figs. 3 and 4 are views for describing a method for determining a thickness of a resin layer of an insert film according to the embodiment of the present invention. In addition to the structure illustrated in Fig. 2, Figs. 3 and 4 also illustrate the first mold 21 which is in contact with the second resin layer 16 when the film insert molding method is used.

Figs. 3 and 4 schematically illustrate a state of the insert film 13 when the molted fiber reinforced plastic 12 is introduced into the mold using the film insert molding method. In the state illustrated in Figs. 3 and 4, the inner face 21a of the first mold 21 and the second face 16b of the second resin layer 16 are in contact with each other.

In Figs. 3 and 4, like constituent parts similar to those of the structure illustrated in Figs. 1 and 2 are denoted by like reference numerals. In Fig. 4, the same reference numerals as in Equation (2) described later are given. Furthermore, Fig. 4 illustrates a case where n-1 is 6, n is 7, and n+1 is 8 as an example.

With reference to Figs. 3 and 4, a method for determining the thicknesses of the first and second resin layers 14 and 16 included in the insert film 13 of the present embodiment will be described. In Fig. 4, as an example, a case where the thickness $t_A$ (= $t_1$ + $t_2$ + $t_3$) of the insert film 13 is equally divided by 10 (m = 10) into the same intervals ($\Delta x$) is illustrated.

Here, when it is assumed that the thermal conductivity of the first and second resin layers 14 and 16 is $\lambda_1$ (W/m·K), the density of the first and second resin layers 14 and 16 is $\rho_1$ (kg/m$^3$), the specific heat of the first and second resin layers 14 and 16 is $Cp_1$ (J/kg·K), the thermal conductivity of the conductive mesh layer 15 is $\lambda_2$ (W/m·K), the density of the conductive mesh layer 15 is $\rho_2$ (kg/m$^3$), the specific heat of the conductive mesh layer 15 is $Cp_2$ (J/kg·K), the temperature of the second face 15b of the conductive mesh layer 15 being in contact with the second resin layer 16 is T(°C), the thickness of first resin layer is $t_1$ ($\mu$m), the thickness of the second resin layer 16 $t_2$ ($\mu$m), the natural logarithm of the thickness $t_1$ of the first resin layer 14 is $\ln(t_1)$, the natural logarithm of the thickness $t_2$ of the second resin layer 16 is $\ln(t_2)$, and a constant obtained based on the thicknesses $t_1$ and $t_2$ of the first and second resin layers 14 and 16 is C, it is necessary to satisfy Equation (2) in order to melt the portions of the first and second resin layers 14 and 16 being in contact with the conductive mesh layer 15.

$$T = f1(\lambda_1, \rho_1, Cp_1)\ln(t_1) + f2(\lambda_2, \rho_2, Cp_2)\ln(t_2) + C$$

$$= \{\lambda_1/(\rho_1 \cdot Cp_1)\}\partial^2 T/\partial x^2 + \{\lambda_2/(\rho_2 \cdot Cp_2)\}\partial^2 T/\partial x^2 + C$$

$$= \{\lambda_1/(\rho_1 \cdot Cp_1)\} \cdot \{(T^P_{n+1} + T^P_{n-1} - 2T^P_n)/(2 \cdot \Delta x)^2\} +$$

$$\{\lambda_2/(\rho_2 \cdot Cp_2)\} \cdot \{(T^P_{n+1} + T^P_{n-1} - 2T^P_n)/(2 \cdot \Delta x)^2\} + C \cdots (2)$$

In Equation (2), n, n+1, and n-1 attached to T are the positions from the second face 16b of the second resin layer 16 which is in contact with the first mold 21 when the total thickness (= $t_1 + t_2 + t_3$) obtained by summing the thickness $t_1$ of the first resin layer 14, the thickness $t_2$ of the second resin layer 16, and the thickness $t_3$ of the conductive mesh 15 is divided by m ($\leq$ n+1), and P attached to T indicates time (sec).

In Equation (2), the temperature at time P and position n+1 is $T^P_{n+1}$, the temperature at time P and position n-1 is $T^P_{n-1}$, and the temperature at time P and position n is $T^P_n$.

In the present embodiment, using P and n which are subscripts of T, time t is $P \cdot \Delta t$, position is $n \cdot \Delta x$, and $T^P_n$ is temperature (node value) in numerical solution. In addition, $\Delta t$ is a time separator and can be set to any value.

The subscript P is an integer. For example, when $\Delta t = 0.1$ (sec) and t = 1 (sec) are set, t becomes $10 \cdot \Delta t$. Therefore, in this case, P becomes 10.

In this case, when $\Delta x = 2$ (mm) is set, the temperature after 1 second at a position of 10 mm becomes $T^{10}_2$.

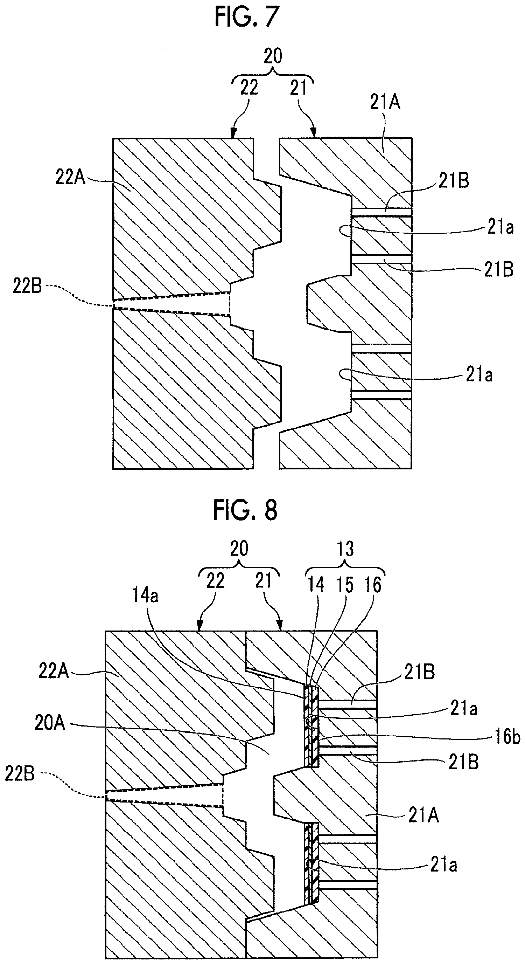

Therefore, the temperature tm (°C) of the first mold 21 (a mold 20 illustrated in Fig. 8 described later) becomes $T^P_m$, and the temperature tr (°C) of the molten fiber reinforced plastic 12 becomes $T^P_0$.

Furthermore, in Equation (2), $2 \cdot \Delta x$ indicates the distance (m) from n-1 (in the case of Fig.4, the position denoted by n-1=6) to n+1 (in the case of Fig. 4, the position denoted by n+1 = 8), and C indicates a constant obtained based on the thicknesses $t_1$ and $t_2$ and the material of the first and second resin layers 14 and 16.

Here, as an example, in a case where polyamide 9T resin (PA9T resin) is used as the material of the first and second resin layers 14 and 16, Cu is used as the material of the conductive mesh layer 15, and carbon fiber reinforced polyamide 9T resin (PA9T-CF resin) is used as the thermoplastic resin forming the fiber reinforced plastic 12, when $\rho_1$ = 1143 (kg/m$^3$), $Cp_1$ = 1491 (J/kg·K), $\lambda_1$ = 0.24 (W/m·K), $\rho_2$ = 8820 (kg/m$^3$), $Cp_2$ = 419 (J/kg·K), $\lambda_2$ = 372 (W/m·K), $t_m$ = 140 (°C), tr = 330 (°C), T = 306 (°C), and C = 99.1 (-) are set, T = f1 ($\lambda_1$, $\rho_1$, $Cp_1$) ln($t_1$) + f2 ($\lambda_2$, $\rho_2$, $Cp_2$) ln ($t_2$) + C in Equation (2) becomes Equation (3) .

$$T = -27.3\ln(t_1) + 56.2\ln(t_2) + 99.1 \quad \cdots (3)$$

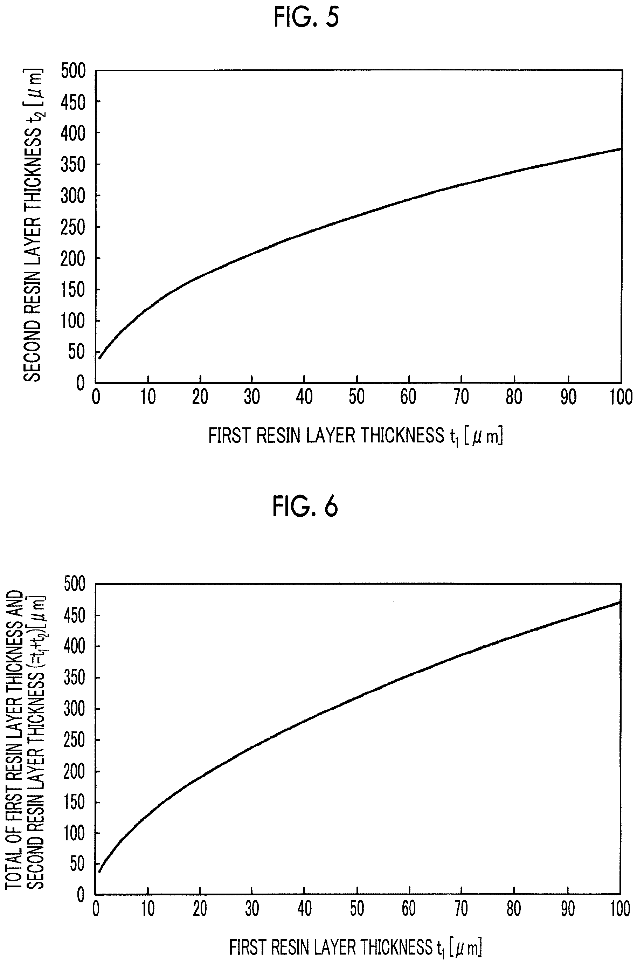

When the relationship between the thickness $t_1$ ($\mu$m) of the first resin layer 14 and the thickness $t_2$ ($\mu$m) of the second resin layer 16 is graphed based on Equation (3), a curve as shown in Fig. 5 is obtained.

Fig. 5 is a graph showing the relationship between the thickness $t_1$ ($\mu$m) of the first resin layer and the thickness $t_2$ ($\mu$m) of the second resin layer in the case where polyamide 9T resin (PA9T resin) is used as the material of the first and second resin layers and Cu is used as the material of the conductive mesh layer.

As illustrated in Fig. 5, by determining the material of the first and second resin layers 14 and 16 and the material of the conductive mesh layer 15 and graphing the relationship between the thickness $t_1$ ($\mu$m) of the first resin layer and the thickness $t_2$ ($\mu$m) of the second resin layer in advance, the thicknesses $t_1$ and $t_2$ of the first and second resin layers with which the bonding strength between the first and second resin layers 14 and 16 and the conductive mesh layer 15 can be increased can be obtained.

Fig. 6 is a graph showing the relationship between the thickness $t_1$ of the first resin layer shown in Fig. 5 and the sum (= $t_1 + t_2$) of the thicknesses of the first and second resin layers shown in Fig. 5.

In addition, by creasing the graph shown in Fig. 6, in a case where it is desired to cause the sum (= $t_1 + t_2$) of the thicknesses of the first and second resin layers 14 and 16 to be a desired value, based on the graph shown in Figs. 5 and 6, the thickness $t_1$ ($\mu$m) of the first resin layer 14 and the thickness $t_2$ ($\mu$m) of the second resin layer 15 can be easily obtained.

The sum (= $t_1 + t_2$) of the thicknesses of the first and second resin layers can be appropriately selected, for example, in a range of 20 $\mu$m or more and 500 $\mu$m or less. However, in terms of ease of installation of the insert film 13 in the first mold 21, the sum (= $t_1 + t_2$) of the thicknesses of the first and second resin layers is, for example, preferably 200 $\mu$m.

According to the method for determining the thickness of the resin layer of the insert film of the present embodiment, by determining the thicknesses $t_1$ and $t_2$ of the first and second resin layers 14 and 16 to satisfy Equation (2), in the case where the insert film 13 and the molded resin article 11 are integrally formed by using the film insert molding method, the temperature of the portions of the first and second resin layers 14 and 16 being in contact with the conductive mesh layer 15 can be higher than the melting temperature of the first and second resin layers 14 and 16.

Accordingly, the portions of the first and second resin layers 14 and 16 being in contact with the conductive mesh layer 15 can be sufficiently melted, so that the bonding strength between the conductive mesh layer 15 and the first and second resin layers 14 and 16 can be increased.

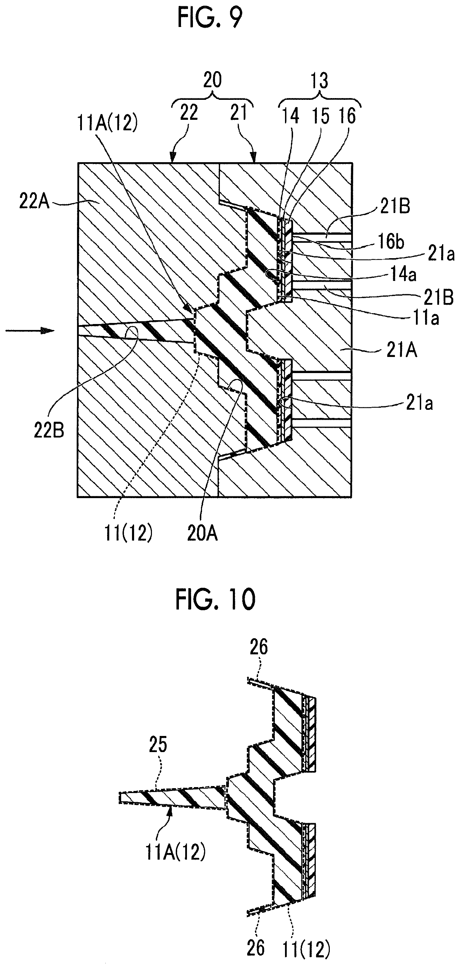

Figs. 7 to 10 are sectional views for describing a manufacturing process of the insert film-equipped molded resin article according to the embodiment of the present invention. In Figs. 7 to 10, like constituent parts similar to those of the structure illustrated in Figs. 1 to 4 are denoted by like reference numerals. In addition, arrow shown in Fig. 9 indicates the direction in which the molten fiber reinforced plastic 12 is introduced.

A method for manufacturing the insert film-equipped molded resin article 10 of the present embodiment will be described with reference to Figs. 1 and 7 to 10.

First, the material of the first and second resin layers 14 and 16, the material of the conductive mesh layer 15, the type of thermoplastic resin forming the fiber reinforced plastic 12, the sum (= $t_1 + t_2$) of the thicknesses of the first and second resin layers 14 and 16, and the thickness $t_3$ of the conductive mesh layer 15 are determined.

For the reasons described above, as the material of the conductive mesh layer 15, for example, Cu or Al is preferable.

As an example, in a case where polyamide 9T resin (PA9T resin) is used as the material of the first and second resin layers 14 and 16, Cu is used as the material of the conductive mesh layer 15 having a thickness $t_3$ of 130 $\mu$m, and carbon fiber reinforced polyamide 9T resin (PA9T-CF resin) is used as the thermoplastic resin, the sum (= $t_1 + t_2$) of the thicknesses of the first and second resin layers 14 and 16 can be set to, for example, 200 $\mu$m.

Next, consideration is made to cause the value of the sum (= $t_1 + t_2$) of the thicknesses of the first and second resin layers 14 and 16 to be a desired value by substituting specific numerical values into Equation (2), whereby the thickness $t_1$ ($\mu$m) of the first resin layer and the thickness $t_2$ ($\mu$m) of the second resin layer 16 are calculated.

Specifically, as an example, in a case where the sum (= $t_1 + t_2$) of the thicknesses of the first and second resin layers 14 and 16 is set to 200 $\mu$m by using polyamide 9T resin (PA9T resin) as the material of the first and second resin layers 14 and 16, Cu as the material of the conductive mesh layer 15, and carbon fiber reinforced polyamide 9T resin (PA9T-CF resin) as the thermoplastic resin, for example, the thickness $t_1$ ($\mu$m) of the first resin layer 14 and the thickness $t_2$ ($\mu$m) of the second resin layer 15 can be set to 22 $\mu$m and 128 $\mu$m, respectively.

Next, the insert film 13 including the first and second resin layers 14 and 16 having the thicknesses $t_1$ and $t_2$ calculated based on Equation (2) and the conductive mesh layer 15 disposed between the first and second resin layers 14 and 16 is prepared (first step).

Since the insert film 13 in this stage is in a state in which the first and second resin layers 14 and 16 and the conductive mesh layer 15 are temporarily fixed, the bonding strength between the first and second resin layers 14 and 16 and the conductive mesh layer 15 is weak.

Next, in a step illustrated in Fig. 7, the mold 20 to be used during film insert molding is prepared. Here, the configuration of the mold 20 will be described.

The mold 20 has the first mold 21 and a second mold 22. The first mold 21 has a mold body 21A, an inner face 21a, and a plurality of suction holes 21B. The mold body 21A is a member made of metal, and the inside facing the second mold 22 corresponds to the shape of the molded resin article 11 illustrated in Fig. 1.

The inner face 21a is a face on which the second face 16b (see Fig. 8) of the second resin layer 16 of the insert film 13 abuts.

The plurality of suction holes 21B are provided so as to penetrate portions corresponding to the inner face 21a of the mold body 21A. The plurality of suction holes 21B are holes by which the second face 16b of the second resin layer 16 of the insert film 13 is adsorbed.

The second mold 22 has a mold body 22A and a resin introduction inlet 22B. The inside of the mold body 22A facing the first mold 21 corresponds to the shape of the molded resin article 11 illustrated in Fig. 1.

The resin introduction inlet 22B is provided to penetrate the mold body 22A and to face the inside of the mold body 21A. The resin introduction inlet 22B is an opening through which the molten fiber reinforced plastic 12 (see Fig. 9) is introduced into the mold 20.

The temperature of the mold 20 having the above configuration is controlled to a predetermined temperature at which the thermoplastic resin contained in the molten fiber reinforced plastic 12 can solidify.

Next, in a step illustrated in Fig. 8, in a state where the first mold 21 and the second mold are separated from each other (the state illustrated in Fig. 7), the insert film 13 is disposed on the inner face 21a of the mold body 21A.

At this time, the insert film 13 is adsorbed on the inner face 21a of the mold body 21A through suction using the plurality of suction holes 21. Accordingly, the position of the insert film 13 with respect to the mold body 21A is restricted.

Next, the first mold 21 and the second mold 22 are brought into contact with each other to form a space 20A corresponding to the shape of the molded resin article 11 illustrated in Fig. 1.

Accordingly, the insert film 13 is disposed in the space 20A formed between the first mold 21 and the second mold 22 in a state in which the second face 16b and the first face 21a are in contact with each other (second step).

Next, in a step illustrated in Fig. 9, the molten fiber reinforced plastic 12 is introduced into the space 20A via the resin introduction inlet 22B. The temperature of the molten fiber reinforced plastic 12 is set to a temperature higher than the melting temperature of the first and second resin layers 14 and 16.

As the fiber reinforced plastic 12, for example, a carbon fiber reinforced plastic, a glass fiber reinforced plastic, or the like can be used.

In a case of using a carbon fiber reinforced plastic, it is possible to use, for example, a resin such as PPS resin, nylon resin, PEEK resin as the thermoplastic resin. In this case, the temperature of the fiber reinforced plastic 12 introduced into the resin introduction inlet 22B is set to a temperature at which the first and second resin layers 14 and 16 can be melted. In a case where carbon fiber reinforced polyamide 9T resin (PA9T-CF resin) is used as the thermoplastic resin, the temperature of the melted fiber reinforced plastic 12 can be set to, for example, 330°C.

Eventually, when the space 20A is filled with the molten fiber reinforced plastic 12, the entire first face 14a of the first resin layer 14 comes into contact with the molten fiber reinforced plastic 12, and the entire first resin layer 14 is melted due to the heat of the molten fiber reinforced plastic 12.

At this time, since the thickness $t_1$ of the first resin layer 14 is smaller than the thickness $t_2$ of the second resin layer 16, the heat of the molten fiber reinforced plastic 12 is easily transferred to the portion of the second resin layer 16 being in contact with the conductive mesh layer 15 through the conductive mesh layer 15.

Accordingly, it is possible to melt the portion of the second resin layer 16 being in contact with the conductive mesh layer 15.

In addition, since the thickness $t_2$ of the second resin layer 16 is larger than the thickness $t_1$ of the first resin layer 14, the heat of the mold 20 at a temperature lower than that of the molten fiber reinforced plastic 12 is less likely to be transferred to the portion of the second resin layer 15 being in contact with the conductive mesh layer 15.

Accordingly, it is possible to suppress a decrease in the temperature of the portion of the second resin layer 16 being in contact with the conductive mesh layer 15 below the melting temperature, so that it is possible to melt the portion of the second resin layer 16 being in contact with the conductive mesh layer 15.

The introduction of the molten fiber reinforced plastic 12 is performed until the space 20A is filled. At this time, the resin introduction inlet 22B is also filled with the molten fiber reinforced plastic 12.

Next, the fiber reinforced plastic 12 introduced into the mold 20 is cured by the mold 20 at a temperature at which the thermoplastic resin can be cured, whereby a primary molded resin article 11A including the molded resin article 11 is molded and the insert film 13 is fused to the surface 11a of the molded resin article 11 (third step).

In the third step, the temperature of the conductive mesh layer 15 at the initial stage of introduction of the molten fiber reinforced plastic 12 into the resin introduction inlet 22B may be set to be higher than the melting temperature of the first and second resin layers 14 and 16.

As described above, by causing the temperature of the conductive mesh layer 15 at the initial stage of introduction of the molten fiber reinforced plastic 12 into the resin introduction inlet 22B to be higher than the melting temperature of the first and second resin layers 14 and 16, it is possible to reliably melt the portions of the first and second resin layers 14 and 16 being in contact with the conductive mesh layer 15.

Accordingly, the bonding strength between the conductive mesh layer 15 and the first and second resin layers 14 and 16 can be further increased.

Next, in a step illustrated in Fig. 10, the primary molded resin article 11A to which the insert film 13 is fused is taken out from the mold 20 illustrated in Fig. 9.

Next, unnecessary portions 25 and 26 are removed from the primary molded resin article 11A illustrated in Fig. 10. Accordingly, the insert film-equipped molded resin article 10 illustrated in Fig. 1 is manufactured (fourth step).

According to the method for manufacturing the insert film-equipped molded resin article 10 of the present embodiment, using the method described above, at least the entire first resin layer 14 and the portion of the second resin layer 16 being in contact with the conductive mesh layer 15 can be melted, so that the bonding strength between the conductive mesh layer 15 and the first and second resin layers 14 and 16 can be increased.

While the preferred embodiment of the present invention has been described above in detail, the present invention is not limited to such a specific embodiment, and various modifications and changes may be made within the scope of the gist of the present invention described in the claims.

Industrial Applicability

The present invention is applicable to a method for determining a thickness of a resin layer of an insert film, a method for manufacturing an insert film-equipped molded resin article, and an insert film.

Reference Signs List

| | |
|---|---|
| 10 | insert film-equipped molded resin article |
| 10a, 11a | surface |
| 11 | molded resin article |
| 11A | primary molded resin article |
| 12 | fiber reinforced plastic |
| 13 | insert film |
| 14 | first resin layer |
| 14a, 15a, 16a | first face |
| 14b, 15b, 16b | second face |
| 15 | conductive mesh layer |
| 16 | second resin layer |
| 20 | mold |
| 20A | space |
| 21 | first mold |
| 21a | inner face |
| 21A, 22A | mold body |
| 21B | suction hole |
| 22 | second mold |
| 22B | resin introduction inlet |
| 25, 26 | unnecessary portion |
| A | region |
| $t_1$ to $t_3$, $t_A$ | thickness |

**Claims**

1. A method for determining a thickness of a resin layer of an insert film, the insert film formed by sequentially laminating a first resin layer thermally fused to a surface of a molded resin article formed of a fiber reinforced plastic containing a thermoplastic resin and reinforcing fibers, a conductive mesh layer, and a second resin layer which is formed of the same resin material as the first resin layer and comes into contact with a mold during molding of the molded resin article,

   wherein a temperature T (°C) of a face of the conductive mesh layer being in contact with the second resin layer, a thickness $t_1$ (μm) of the first resin layer, and a thickness $t_2$ (μm) of the second resin layer satisfy Equation (1).

$$T = f1(\lambda_1, \rho_1, Cp_1)\ln(t_1) + f2(\lambda_2, \rho_2, Cp_2)\ln(t_2) + C$$

$$= \{\lambda_1/(\rho_1 \cdot Cp_1)\}\partial^2 T/\partial x^2 + \{\lambda_2/(\rho_2 \cdot Cp_2)\}\partial^2 T/\partial x^2 + C$$

$$= \{\lambda_1/(\rho_1 \cdot Cp_1)\} \cdot \{(T^P_{n+1} + T^P_{n-1} - 2T^P_n)/(2 \cdot \Delta x)^2\} +$$

$$\{\lambda_2/(\rho_2 \cdot Cp_2)\} \cdot \{(T^P_{n+1} + T^P_{n-1} - 2T^P_n)/(2 \cdot \Delta x)^2\} + C \cdots (1)$$

   In Equation (1), $\ln(t_1)$ is a natural logarithm of the thickness $t_1$ of the first resin layer, $\ln(t_2)$ is a natural logarithm of the thickness $t_2$ of the second resin layer, a thermal conductivity of the first and second resin layers is $\lambda_1$ (W/m·K), a density of the first and second resin layers is $\rho_1$ (kg/m$^3$), a specific heat of the first and second resin layers is $Cp_1$ (J/kg·K), a density of the conductive mesh layer is $\rho_2$ (kg/m$^3$), a specific heat of the conductive mesh layer is $Cp_2$ (J/kg·K), and a thermal conductivity of the conductive mesh layer is $\lambda_2$ (W/m·K).

   In Equation (1), n, n+1, and n-1 attached to T are the positions from a face of the second resin layer which is in contact with the mold when a total thickness obtained by summing the thickness of the first resin layer, the thickness of the second resin layer, and the thickness of the conductive mesh is divided by m ($\leq$ n+1), and P attached to T indicates time (sec).

   In Equation (1), a temperature at time P and position n+1 is $T^P_{n+1}$, a temperature at time P and position n-1 is $T^P_{n-1}$, and a temperature at time P and position n is $T^P_n$.

In addition, in Equation (1), 2·Δx indicates a distance (m) from n-1 to n+1, and C indicates a constant obtained based on the thicknesses and the material of the first and second resin layers.

2. The method for determining a thickness of a resin layer of an insert film according to claim 1, wherein the thickness of the second resin layer is larger than the thickness of the first resin layer.

3. A method for manufacturing an insert film-equipped molded resin article, comprising:

a first step of preparing the insert film including the first and second resin layers having the thicknesses determined based on the method for determining a thickness of a resin layer of an insert film according to claim 1 or 2;
a second step of disposing the insert film in a space formed between a first mold and second mold provided with a resin introduction inlet by bringing the second resin layer and an inner face of the first mold into contact with each other;
a third step of introducing the fiber reinforced plastic which is molten into the space through the resin introduction inlet to melt at least portions of the first and second resin layers which are in contact with the conductive mesh layer, by heat of the molten fiber reinforced plastic, and curing the molten fiber reinforced plastic by the first and second molds at a temperature at which the thermoplastic resin is cured to mold a primary molded resin article including the molded resin article and fuse the insert film to the surface of the molded resin article; and
a fourth step of forming the molded resin article to which the insert film is fused by removing unnecessary portions from the primary molded resin article.

4. The method for manufacturing an insert film-equipped molded resin article according to claim 3, Wherein, in the third step, a temperature of the conductive mesh layer at an initial stage of introduction of the molten fiber reinforced plastic into the resin introduction inlet is higher than a melting temperature of the first and second resin layers.

5. The method for manufacturing an insert film-equipped molded resin article according to claim 3 or 4, wherein Cu or Al is used as a material of the conductive mesh layer.

6. An insert film formed by sequentially laminating a first resin layer disposed on a surface of a molded resin article formed of a fiber reinforced plastic containing a thermoplastic resin, a conductive mesh layer, and a second resin layer formed of the same resin material as the first resin layer, wherein a thickness of the second resin layer is larger than a thickness of the first resin layer.

7. The insert film according to claim 6, wherein a material of the conductive mesh layer is Cu or Al.

## FIG. 1

## FIG. 2

# FIG. 3

FIG. 4

## FIG. 5

## FIG. 6

# FIG. 7

# FIG. 8

# FIG. 9

# FIG. 10

## INTERNATIONAL SEARCH REPORT

| | International application No. |
|---|---|
| | PCT/JP2017/027688 |

**A. CLASSIFICATION OF SUBJECT MATTER**
*B29C45/14(2006.01)i*

According to International Patent Classification (IPC) or to both national classification and IPC

**B. FIELDS SEARCHED**

Minimum documentation searched (classification system followed by classification symbols)
B29C45/14

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2014-43086 A  (Ube Machinery Corporation, Ltd.),<br>13 March 2014 (13.03.2014),<br>claim 1; paragraphs [0002] to [0003]<br>(Family: none) | 6-7<br>1-5 |
| Y<br>A | JP 2006-219078 A  (Honda Motor Co., Ltd.),<br>24 August 2006 (24.08.2006),<br>paragraphs [0002], [0014] to [0018]<br>(Family: none) | 6-7<br>1-5 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 September 2017 (14.09.17) | 26 September 2017 (26.09.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017015043 A
- JP 4037437 B